# EUROPEAN PATENT SPECIFICATION

(11) **EP 3 623 290 B1**
(45) Date of publication and mention of the grant of the patent: **14.06.2023**
(21) Application number: 19195402.3
(22) Date of filing: 04.09.2019
(51) Int. Cl.: B64D 13/06

(54) **TWO-TURBINE ENVIRONMENTAL CONTROL SYSTEM**
ZWEITURBINEN-UMWELTKONTROLLSYSTEM
SYSTÈME DE COMMANDE ENVIRONNEMENTAL DOTÉ DE DEUX TURBINES

(30) Priority: 13.09.2018 US 201816130389
(43) Date of publication of application: 18.03.2020
(73) Proprietor: Hamilton Sundstrand Corporation, Charlotte, NC 28217-4578 (US)
(72) Inventor: RETERSDORF, Alan, Avon, CT 06001 (US); PESS, Matthew, Hartford, CT 06107 (US); DeFrancesco, Gregory L., Simsbury, CT 06070 (US)
(74) Representative: Dehns

(56) References cited:
- EP-A1- 3 100 953
- EP-A1- 3 241 757
- EP-A1- 3 489 488
- EP-A1- 3 546 363
- EP-A2- 1 295 789
- US-A- 4 535 606
- US-A1- 2016 347 456

## Description

### BACKGROUND

Various parts of an aircraft utilize conditioned air for cooling, providing a desired pressure, or other purposes. For instance, conditioned air can be used to provide a comfortable pressurized environment for an aircraft cabin/cockpit. Conditioned air can also be used to cool various parts of the aircraft engine or avionics. Other example uses for conditioned air are smoke detection, fire suppression, or other functions.

An air cycle Environmental Control System (ECS) conditions bleed air from an engine for use in other parts of the aircraft as discussed above. The engine bleed air is typically hot and/or includes moisture. Therefore, the ECS conditions the air by reducing its temperature and/or moisture content for the desired application. Accordingly, an ECS may include one or more heat exchangers and/or condensers to provide cool, dry conditioned air. An ECS may take advantage of ram (outside) air for providing cooling via the heat exchangers. EP 3489 488 A1 relates to an environmental control system. EP 3 100 953 A1 relates to an environmental control system with multiple operating modes.

### SUMMARY

An environmental control system for an aircraft according to claim 1 is provided.

A method of conditioning air according to claim 8 is provided.

### BRIEF DESCRIPTION OF THE DRAWINGS

Certain exemplary embodiments will now be described in greater detail by way of example only and with reference to the accompanying drawings, in which:
Figure 1 schematically shows an engine and Environmental Control System.
Figure 2 schematically shows an example pneumatic arrangement for the Environmental Control System of Figure 1.
Figure 3 schematically shows another example pneumatic arrangement for the Environmental Control System of Figure 1.

### DETAILED DESCRIPTION

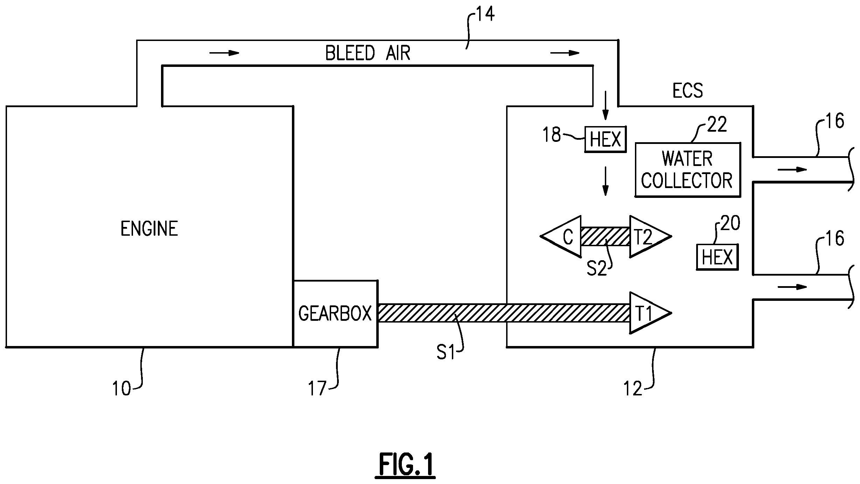

Figure 1 schematically shows an engine 10 and an Environmental Control System (ECS) 12. The engine 10 is a gas turbine engine for an aircraft. One example gas turbine engine is a two-spool turbofan that generally incorporates a fan section, a compressor section, a combustor section, and a turbine section. The fan section drives air along a bypass flow path and also along a core engine flow path. Air in the core engine flow path is compressed in the compression section and then communication to a combustor in the combustor section for combustion, followed by expansion in the turbine section. Other example engines have single-spool or three-spool architectures, or other arrangements.

The ECS 12 receives bleed air from the engine 10 via bleed air line 14. The bleed air line 14 can draw bleed air from various stages of the engine 10, depending on the engine 10 architecture and design as discussed above. In the two-spool engine example, bleed air can be drawn from the compressor section.

The ECS 12 conditions the bleed air by passing it through turbines and compressors. The turbines and compressors are arranged and operated to provide maximum cooling efficiency. The ECS 12 may also include one or more heat exchangers 20 and/or water collectors 22 to provide additional cooling and drying for the bleed air. The ECS 12 may also include various valves and sensors for controlling airflow and temperature. The conditioned bleed air is then sent to various parts of the aircraft via ducts 16. For example, conditioned bleed air can be used to provide a comfortable pressurized environment for an aircraft cabin/cockpit, for engine or avionics cooling, for an On Board Inert Gas Generating System (OBIGGS), or other applications.

In one example, the ECS cooling system can interact with other cooling systems of the aircraft, such as fuel or liquid cooling systems. That is, some of the heat exchangers 20 in the ECS can be in communication with liquid or fuel from the engine 10 to provide cooling.

With continued reference to Figure 1, the ECS 12 is powered by a two-stage turbine air cycle system to maximize the refrigeration (cooling) of the ECS. A first turbine T1 is coupled directly to the engine 10 by shaft S1 via an engine gearbox 17. That is, power is transmitted between the first turbine T1 and the engine 10 via the gearbox 17. The second turbine T2 is coupled to a compressor C as a "bootstrap" air cycle machine (ACM) via shaft S2. A pre-cooler 18 pre-cools the bleed air before it is provided to the first and second turbines T1, T2 and compressor C. As the air passes through the first turbine T1 and the ACM comprising the second turbine T2 and compressor C, it is cooled.

The turbines T1, T2 reduce ECS 12 overall power consumption and increases overall ECS 12 efficiency. In turn, the overall power consumption of the engine 10 is reduced and the overall efficiency of the engine 10 is increased. The first turbine T1 allows power from the ECS 12 to be recycled to the engine 10 via the gearbox 17. Since the first turbine T1 shares power with the engine 10 via the gearbox 17, it has a lower heat rejection requirement (e.g., amount of heat removed, which directly correlates to a power requirement for the turbine) than a turbine in a bootstrap cycle like the turbine T2. On the other hand, since the first turbine T1 is coupled to the engine 10, its location within the ECS 12 and its speed control is more limited as compared to the second turbine T2. However, since the second turbine T2 is only coupled to the compressor C, there is more flexibility in its location within the ECS 12 as well as increased control of its speed and operation as compared to the first turbine T1.

Accordingly, the two turbines T1 and T2 together provide an overall reduced heat rejection requirement while maintaining adequate flexibility in installation and control for the ECS 12.

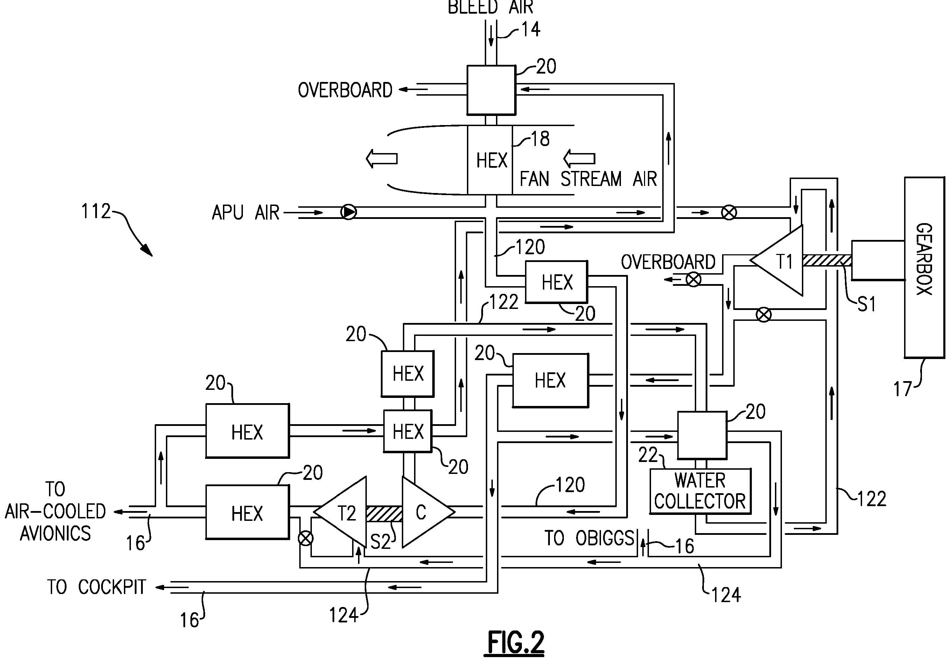

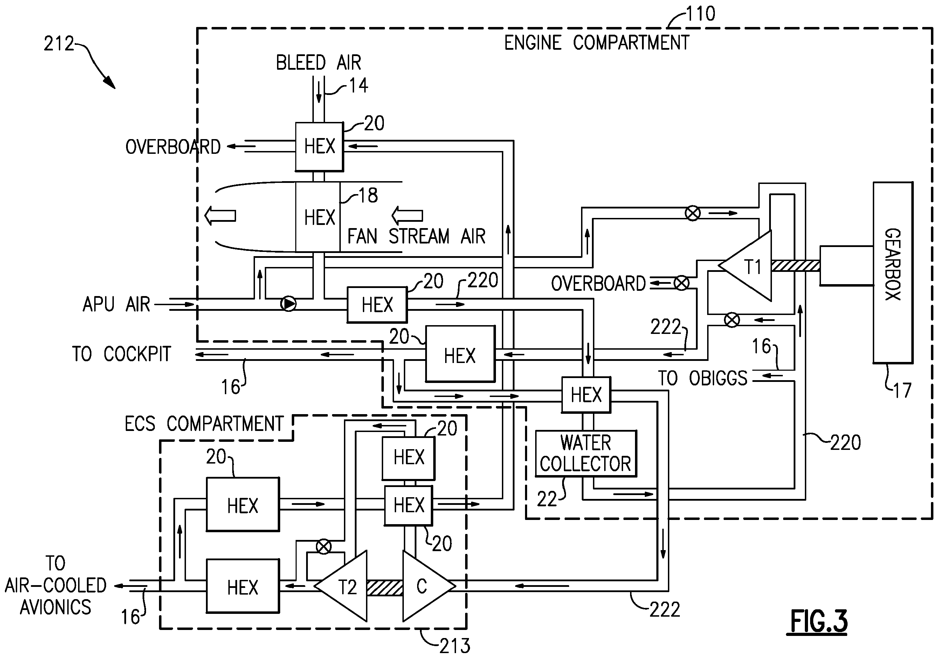

Figures 2 and 3 show two example pneumatic arrangements for the ECS 12. Turning first to Figure 2, the example ECS 112 routes bleed air from the bleed air duct 14 through the pre-cooler 18. The pre-cooler 18 is a heat exchanger which in this example, is cooled by air from the engine 10 fan. In another example, the pre-cooler 18 may be cooled by ram (outside) air. Bleed air is then routed via duct 120 to the compressor C and the second turbine T2. Then, bleed air is routed via duct 122 to the first turbine T1. Air is recycled from the first turbine T1 back through the second turbine T2 via duct 124.

The first and second turbines T1 and T2 and the compressor C are all situated adjacent the engine 10 (not shown). The first and second turbines T1 and T2 and the compressor C are all situated in a common compartment with the engine 10. However, it should be understood that in other examples not according to the claimed invention the second turbine T2 and the compressor C can be situated in a separate compartment from the engine and first turbine T1.

As shown in the example of Figure 2, the ECS 112 includes various heat exchangers 20 and a water collector 22. As the bleed air is routed through the compressor C, second turbine T2, and first turbine T1, it passes through the heat exchangers 20 and water collected 22 and is cooled and dried. As discussed above the heat exchangers 20 can interact with other cooling systems of the engine 10, such as fuel or liquid cooling systems. Though the example ECS 112 includes a certain number and arrangement of heat exchangers 20 and water collectors 22, it should be understood any number or arrangement of heat exchangers 20 and water collectors 22 are contemplated by this arrangement.

The ECS 112 conditions (e.g., cools and dries) the bleed air as discussed above and provides it to various engine locations via ducts 16, such as air-cooled avionics, OBIGGS, and the aircraft cockpit, though ducts 16 can provide air to other locations as well, as discussed above.

Turning now to Figure 3, another example ECS 212 not according to the claimed invention 212 is shown. In this example, the first turbine T1 is situated in an engine compartment 110, while the second turbine T2 and compressor C are situated in a separate ECS compartment 213. However, it should be understood that in other examples, the first and second turbines T1 and T2 and the compressor C can all be situated in a common compartment with the engine 10. In ECS 212, bleed air from the bleed air duct 14 is routed through the pre-cooler 18. As above, the pre-cooler 18 is a heat exchanger which in this example, is cooled by air from the engine 10 fan. In another example, the pre-cooler 18 may be cooled by ram (outside) air. Bleed air is then routed via duct 220 to the first turbine T1. Then, bleed air is routed via duct 222 to the compressor C and second turbine T2.

As shown in the example of Figure 2, the ECS 212 includes various heat exchangers 20 and a water collector 22. As the bleed air is routed through the first turbine T1, compressor C, and second turbine T2, it passes through the heat exchangers 20 and water collected 22 and is cooled and dried. As discussed above the heat exchangers 20 can interact with other cooling systems of the engine 10, such as fuel or liquid cooling systems. Though the example ECS 212 includes a certain number and arrangement of heat exchangers 20 and water collectors 22, it should be understood any number or arrangement of heat exchangers 20 and water collectors 22 are contemplated by this arrangement.

The ECS 212 conditions (e.g., cools and dries) the bleed air as discussed above and provides it to various engine locations via ducts 16, such as air-cooled avionics, OBIGGS, and the aircraft cockpit, though ducts 16 can provide air to other locations as well, as discussed above.

Though the ECS 112 and the ECS 212 in the examples of Figures 2 and 3, respectively, have different pneumatic arrangements (that is, air is routed differently in the ECS 112 and the ECS 212), they both have first turbine T1 and second turbine T2 which provide an overall reduced heat rejection requirement while maintaining adequate the flexibility in installation and control, as discussed above.

The foregoing description shall be interpreted as illustrative and not in any limiting sense. A worker of ordinary skill in the art would understand that certain modifications could come within the scope of this invention, which is defined by the appended claims.

## Claims

1. An environmental control system (12) for an aircraft, comprising:
a first turbine (T1) configured to be coupled to an engine (10);
a second turbine (T2) and a compressor (C), the second turbine (T2) coupled to the compressor (C); and
one or more ducts (16) configured to provide bleed air from the engine to the first and second turbines and the compressor such that the first and second turbines and the compressor condition the bleed air; **characterized in that** the first (T1) and second (T2) turbines, and the compressor (C) are configured to be situated in a common compartment of an aircraft with the engine (10) and the first turbine is configured to power the engine via a gearbox.

2. The environmental control system of claim 1, further comprising a pre-cooler (18) configured to pre-cool the bleed air prior to it being provided to the first (T1) and second (T2) turbines and the compressor (C).

3. The environmental control system of any preceding claim, wherein the one or more ducts (16) comprises a first duct (120) configured to provide bleed air to the compressor (C) and a second duct (122) configured to provide bleed air from the compressor (C) to the first turbine (T1).

4. The environmental control system of claim 1 or claim 2, wherein the one or more ducts (16) comprises a first duct (120) configured to provide bleed air to the first turbine (T1) and a second duct (122) configured to provide bleed air from the first turbine to the compressor (C) and the second turbine (T2).

5. The environmental control system of any preceding claim, further comprising one or more heat exchangers (20) and one or more water collectors (22) configured to condition the bleed air, and optionally wherein at least one of the one or more heat exchangers (20) is in communication with at least one of cooling liquid and fuel from the engine (10).

6. The environmental control system of any preceding claim, wherein the conditioning includes at least one of cooling and drying the bleed air.

7. The environmental control system of any preceding claim, wherein the engine (10) is a two-spool turbofan, and the bleed air is from a compressor section of the two-spool turbofan.

8. A method of conditioning air, comprising:
providing bleed air from an engine (10) to an environmental control system (12), the environmental control system including a first turbine (T1) coupled to the engine (10), and a second turbine coupled to a compressor (C), whereby the bleed air is conditioned by the first and second turbines and the compressor; **characterized in that** the first (T1) and second (T2) turbines, the compressor (C), and the engine (10) are all situated in a common compartment of an aircraft and the first turbine drives the engine via a gearbox.

9. The method of claim 8, further comprising providing the bleed air to a pre-cooler (18) prior to providing the bleed air to the first (T1) and second (T2) turbines and the compressor (C).

10. The method of claim 8 or 9, wherein providing includes providing bleed air to the compressor (C) prior to providing bleed air to the first turbine (T1); or wherein providing includes providing bleed air to the first turbine (T1) prior to providing bleed air to the compressor (C).

11. The method of any of claims 8 to 10, further comprising providing conditioned air to at least one of an aircraft cabin, an aircraft cockpit, an aircraft On Board Inert Gas Generator System (OBIGGS), or aircraft avionics.

12. The method of any of claims 8 to 11, wherein the conditioning including at least one of cooling and drying.

## Patentansprüche

1. Umweltkontrollsystem (12) für ein Luftfahrzeug, umfassend:
eine erste Turbine (T1), die dazu konfiguriert ist, an ein Triebwerk (10) gekoppelt zu werden;
eine zweite Turbine (T2) und einen Verdichter (C), wobei die zweite Turbine (T2) an den Verdichter (C) gekoppelt ist; und
einen oder mehrere Kanäle (16), die dazu konfiguriert sind, der ersten und der zweiten Turbine und dem Verdichter Zapfluft von dem Triebwerk zuzuführen, sodass die erste und die zweite Turbine und der Verdichter die Zapfluft aufbereiten; **dadurch gekennzeichnet, dass** die erste (T1) und die zweite (T2) Turbine und der Verdichter (C) dazu konfiguriert sind, in einem gemeinsamen Abteil eines Luftfahrzeugs mit dem Triebwerk (10) angeordnet zu sein, und die erste Turbine dazu konfiguriert ist, das Triebwerk über ein Getriebe anzutreiben.

2. Umweltkontrollsystem nach Anspruch 1, ferner umfassend einen Vorkühler (18), der dazu konfiguriert ist, die Zapfluft vorzukühlen, bevor sie der ersten (T1) und der zweiten (T2) Turbine und dem Verdichter (C) zugeführt wird.

3. Umweltkontrollsystem nach einem der vorhergehenden Ansprüche, wobei der eine oder die mehreren Kanäle (16) einen ersten Kanal (120), der dazu konfiguriert ist, dem Verdichter (C) Zapfluft bereitzustellen, und einen zweiten Kanal (122), der dazu konfiguriert ist, der ersten Turbine (T1) Zapfluft von dem Verdichter (C) bereitzustellen, umfassen.

4. Umweltkontrollsystem nach Anspruch 1 oder Anspruch 2, wobei der eine oder die mehreren Kanäle (16) einen ersten Kanal (120), der dazu konfiguriert ist, der ersten Turbine (T1) Zapfluft bereitzustellen, und einen zweiten Kanal (122), der dazu konfiguriert ist, dem Verdichter (C) und der zweiten Turbine (T2) Zapfluft von der ersten Turbine bereitzustellen, umfassen.

5. Umweltkontrollsystem nach einem der vorhergehenden Ansprüche, ferner umfassend einen oder mehrere Wärmetauscher (20) und einen oder mehrere Wassersammler (22), die dazu konfiguriert sind, die Zapfluft aufzubereiten, und wobei optional mindestens einer des einen oder der mehreren Wärmetauscher (20) mit mindestens einem von Kühlflüssigkeit und Kraftstoff von dem Triebwerk (10) in Verbindung steht.

6. Umweltkontrollsystem nach einem der vorhergehenden Ansprüche, wobei das Aufbereiten mindestens eines von Kühlen und Trocknen der Zapfluft beinhaltet.

7. Umweltkontrollsystem nach einem der vorhergehenden Ansprüche, wobei das Triebwerk (10) ein Zweiwellen-Turbofan ist und die Zapfluft von einem Verdichterabschnitt des Zweiwellen-Turbofans stammt.

8. Verfahren zum Aufbereiten von Luft, umfassend:
Bereitstellen von Zapfluft von einem Triebwerk (10) an ein Umweltsteuersystem (12), wobei das Umweltsteuersystem eine an das Triebwerk (10) gekoppelte erste Turbine (T1) und eine an den Verdichter (C) gekoppelte zweite Turbine beinhaltet, wodurch die Zapfluft durch die erste und die zweite Turbine und den Verdichter aufbereitet wird; **dadurch gekennzeichnet, dass** die erste (T1) und die zweite (T2) Turbine, der Verdichter (C) und das Triebwerk (10) alle in einem gemeinsamen Abteil eines Luftfahrzeugs angeordnet sind und die erste Turbine das Triebwerk über ein Getriebe antreibt.

9. Verfahren nach Anspruch 8, ferner umfassend Bereitstellen der Zapfluft an einen Vorkühler (18) vor dem Bereitstellen der Zapfluft an die erste (T1) und die zweite (T2) Turbine und den Verdichter (C).

10. Verfahren nach Anspruch 8 oder 9, wobei das Bereitstellen Bereitstellen von Zapfluft an den Verdichter (C) vor dem Bereitstellen von Zapfluft an die erste Turbine (T1) beinhaltet; oder wobei das Bereitstellen Bereitstellen von Zapfluft an die erste Turbine (T1) vor dem Bereitstellen von Zapfluft an den Verdichter (C) beinhaltet.

11. Verfahren nach einem der Ansprüche 8 bis 10, ferner umfassend Bereitstellen aufbereiteter Luft an mindestens eines von einer Luftfahrzeugkabine, einem Luftfahrzeugcockpit, einem bordeigenen Inertgasgeneratorsystem (OBIGGS) eines Luftfahrzeugs oder einer Luftfahrtelektronik eines Luftfahrzeugs.

12. Verfahren nach einem der Ansprüche 8 bis 11, wobei das Aufbereiten mindestens eines von Kühlen und Trocknen beinhaltet.

## Revendications

1. Système de commande environnemental (12) pour un aéronef, comprenant :
une première turbine (T1) conçue pour être couplée à un moteur (10) ;
une seconde turbine (T2) et un compresseur (C), la seconde turbine (T2) étant couplée au compresseur (C) ; et
un ou plusieurs conduits (16) conçus pour fournir de l'air prélevé du moteur aux première et seconde turbines et au compresseur de sorte que les première et seconde turbines et le compresseur conditionnent l'air prélevé ; **caractérisé en ce que** les première (T1) et seconde (T2) turbines, et le compresseur (C) sont conçus pour être situés dans un compartiment commun d'un aéronef avec le moteur (10) et la première turbine est conçue pour alimenter le moteur via une boîte de vitesse.

2. Système de commande environnemental selon la revendication 1, comprenant en outre un pré-refroidisseur (18) conçu pour pré-refroidir l'air de prélèvement avant qu'il ne soit fourni aux première (T1) et seconde (T2) turbines et au compresseur (C).

3. Système de commande environnemental selon une quelconque revendication précédente, dans lequel les un ou plusieurs conduits (16) comprennent un premier conduit (120) conçu pour fournir de l'air prélevé au compresseur (C) et un second conduit (122) conçu pour fournir de l'air prélevé du compresseur (C) à la première turbine (T1).

4. Système de commande environnemental selon la revendication 1 ou la revendication 2, dans lequel les un ou plusieurs conduits (16) comprennent un premier conduit (120) conçu pour fournir de l'air prélevé à la première turbine (T1) et un second conduit (122) conçu pour fournir de l'air prélevé de la première turbine au compresseur (C) et à la seconde turbine (T2).

5. Système de commande environnemental selon une quelconque revendication précédente, comprenant en outre un ou plusieurs échangeurs de chaleur (20) et un ou plusieurs collecteurs d'eau (22) conçus pour conditionner l'air prélevé, et éventuellement dans lequel au moins l'un des un ou plusieurs échangeurs de chaleur (20) est en communication avec au moins l'un du liquide de refroidissement et du carburant provenant du moteur (10).

6. Système de commande environnemental selon une quelconque revendication précédente, dans lequel le conditionnement comporte au moins l'un du refroidissement et du séchage de l'air prélevé.

7. Système de commande environnemental selon une quelconque revendication précédente, dans lequel le moteur (10) est un turboréacteur à deux corps, et l'air prélevé provient d'une section de compresseur du turboréacteur à deux corps.

8. Procédé de conditionnement d'air, comprenant :
la fourniture d'air de prélèvement d'un moteur (10) à un système de commande environnemental (12), le système de commande environnemental comportant une première turbine (T1) couplée au moteur (10) et une seconde turbine couplée à un compresseur (C), moyennant quoi l'air prélevé est conditionné par les première et seconde turbines et le compresseur ; **caractérisé en ce que** les première (T1) et seconde (T2) turbines, le compresseur (C) et le moteur (10) sont tous situés dans un compartiment commun d'un aéronef et la première turbine entraîne le moteur via une boîte de vitesses.

9. Procédé selon la revendication 8, comprenant en outre la fourniture de l'air de prélèvement à un prérefroidisseur (18) avant de fournir l'air de prélèvement aux première (T1) et seconde (T2) turbines et au compresseur (C).

10. Procédé selon la revendication 8 ou 9, dans lequel la fourniture comporte la fourniture d'air de prélèvement au compresseur (C) avant la fourniture d'air de prélèvement à la première turbine (T1) ; ou dans lequel la fourniture comporte la fourniture d'air de prélèvement à la première turbine (T1) avant la fourniture d'air de prélèvement au compresseur (C).

11. Procédé selon l'une quelconque des revendications 8 à 10, comprenant en outre la fourniture d'air conditionné à au moins une cabine d'avion, un cockpit d'avion, un système générateur de gaz inerte embarqué (OBIGGS) d'avion ou une avionique d'avion.

12. Procédé selon l'une quelconque des revendications 8 à 11, dans lequel le conditionnement comporte au moins l'un du refroidissement et du séchage.
